Europäisches Patentamt

European Patent Office

Office européen des brevets

(11) Publication number: **0 454 085 A2**

## EUROPEAN PATENT APPLICATION

(21) Application number: 91106588.6

(22) Date of filing: 24.04.91

(51) Int. Cl.⁵: **H04N 1/46**

(30) Priority: 27.04.90 US 515606

(43) Date of publication of application:
30.10.91 Bulletin 91/44

(84) Designated Contracting States:
DE FR GB

(71) Applicant: HONEYWELL INC.
Honeywell Plaza
Minneapolis Minnesota 55408(US)

(72) Inventor: Wittenberger, John C.
3017 East Nichols Creek
Littleton, Colorado 80122(US)
Inventor: Shaklee, Kerry L.
15782 Duquesne Creek
Brighton, Colorado 80601(US)

(74) Representative: Altenburg, Udo, Dipl.-Phys. et al
Patent- und Rechtsanwälte
Bardehle-Pagenberg-Dost-Altenburg
Frohwitter-Geissler & Partner Postfach 86 06 20
W-8000 München 86(DE)

(54) **Method and apparatus for correcting color in graphic recorders.**

(57) A method and apparatus for correcting differences between individual desired shades of color and actual shades of color produced on a recording medium which comprises providing a test pattern of the desired shades of color and recording the test pattern on the medium and then determining differences between the recorded shades and the desired shades with any differences resulting in modification of the system parameters to correct each individual shade of color recorded thereafter.

FIG. 1

EP 0 454 085 A2

## BACKGROUND OF THE INVENTION

In the art of color recording such as is described in U.S. Patent No. 4,309,720 issued January 5, 1982 in the name of Dan F. Denham, a problem arises when, for example, a recording medium is replaced because a new supply of such paper may not always have the same color characteristics. Likewise, over a period of time, the phosphors in the CRT may age or the parameters of the developer may drift. The result can be that signals to the recorder calling for a certain color may not come out the same at different times or on different supplies of recording medium. Color correction schemes have been proposed in the past but have been found to be insufficient for high resolution color recording. For example, in the Takaaki Terashita Patent 4,860,059 entitled, "Method of setting color copying conditions" which issued August 22, 1989, a system for correcting color is proposed wherein a test pattern consisting of four shades of each of three colors is observed and then a print of the pattern is made and the print is observed. Relationships between the observations is obtained and, based on the relationships, three color filters are adjusted in the optical path so that the three components of light are controlled to control the exposures. A major problem with such system is that all of the shades within a given color are compensated by the same amount and the user cannot adjust the color of one shade without affecting the others. Thus some shades will not be accurate with the result that high resolution color reproduction is not possible.

## SUMMARY OF THE INVENTION

The present invention corrects the problem by providing a method and apparatus for checking and independntly adjusting all of the individual shades of color desired each time a new supply of recording medium is introduced or, alternately, whenever a compensation routine is called for by the user. If there is a change of color from a standard palette, corrections to the recording apparatus are introduced to change the color output of the recording apparatus in a compensating manner for each shade in error. More particularly, signals representing a test pattern including the plurality of shades of color are presented to the pixel input of the imaging device (such as a color CRT, LED array or thermal head) which produces an image of the pattern. The recording medium is then exposed to the image and a recording of the pattern is developed. The develope image is then passed by a color sensing device and signals indicative of the actual recorded shades are compared to those indicative of the reference shades. Any differences are then used to modify the signals to the imaging device so that when a particular shade is called for, it will be that shade when recorded and developed.

## BRIEF DESCRIPTION OF THE DRAWINGS

Figure 1 is a schematic block diagram of a preferred embodiment of the present invention;

Figure 2 is a diagram showing the steps taken by the present invention to provide color correction;

Figure 3 is a chart showing how comparisons of actual color sensed to desired colors are made to provide correcting signals to the system;

Figure 4 is a cross sectional view of the color sensor of Figure 1; and

Figure 5 is a representation of a test pattern with 32 different shades for each of three colors.

## DETAILED DESCRIPTION OF THE PREFERRED EMBODIMENTS

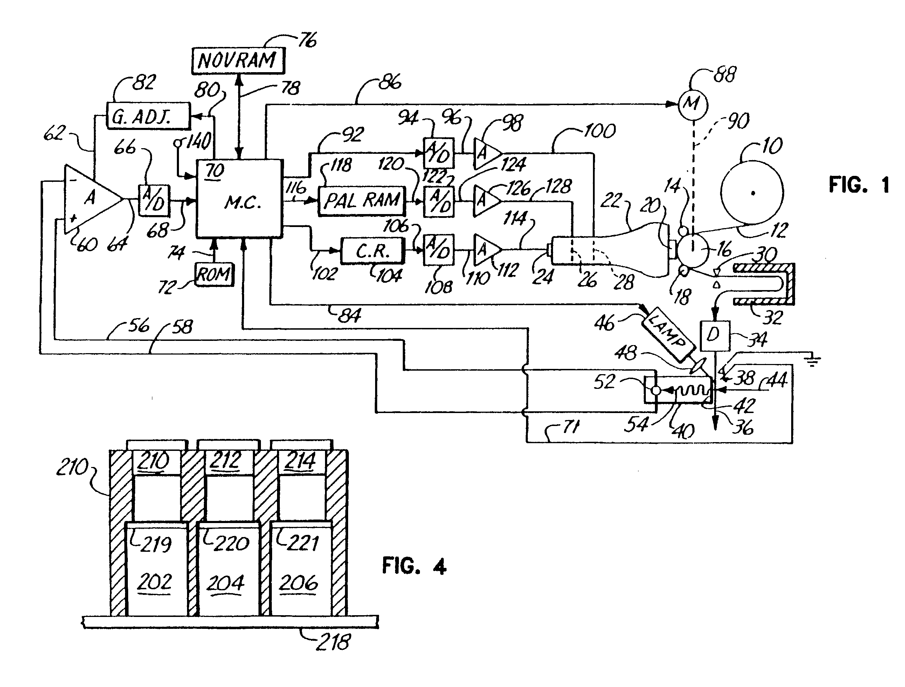

In Figure 1, a supply of recording medium 10 such as, for example, a roll of 3M color sensitive paper type 5550, or a film transparency material is shown providing a supply of medium 12 which leaves the roll 10 and proceeds past an input roller 14, a capstan drive 16 and an output roller 18. Capstan roller 16 is shown causing the medium 12 to pass adjacent to a writing head 20 of a CRT 22. Writing head 20 may be composed of a plurality of fiber optic members which transfer the image on the face of CRT 20 to the recording medium 12. The recording head 20 and CRT 22 may be like that shown in the above mentioned Patent 4,309,720 or like that shown in a co-pending application entitled "Compensation For Drift In a Cathode Ray Tube" filed on April 26, 1990 with serial number 07/515,062 and assigned to the assignee of the present invention. In such systems, three parallel rows of phosphors in colors red, green and blue are deposited on the inside surface of the fiber optic writing head 20 and as the electron beam sweeps, each is caused to glow as required by the called for color. The fiber optic members conduct the light from the phosphors to the recording medium 12.

CRT 22 has a cathode 24, a first grid 26 and a second grid 28 and operates to create an image on the face of CRT 22 in a manner described the above mentioned co-pending application. Briefly, a pixel input signal is presented either to the cathode or the first grid and the variations in voltage thereon cause variations in the intensity of the beam striking the phosphors. By increasing the intensity of the beam, the brightness of the color generated by the phosphors is increased and vice versa.

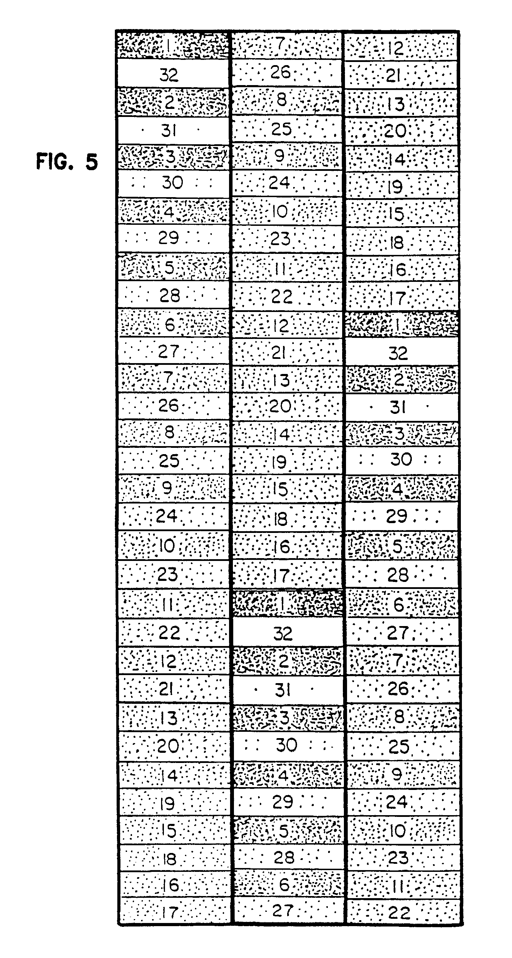

After leaving exit roller 18, medium 12 passes by a cutter 30 where the exposed images may be cut to appropriate size and stored in an accumulator 32 or, alternately, the paper may remain uncut and folded into the accumulator 32. Accumulator 32 is sized to accommodate full prints and to store them until ready for developing. When called for, exposed material from the accumulator 32 is passed to a development chamber shown as box 34 and which may be a thermal developer such as 3M model 9009. From the developer 34, the finished prints or transparencies leave the system to the user as shown by arrow 36. This route is shown passing a sensing switch 38, operable to determine when the recording medium is in a desired location. The switch may also be used to determine when the medium may be jammed in the developer. After leaving the developer 34, the recording medium passes a color sensor 40 having a face 42 against which the developed medium 12 is pressed as by a solenoid shown by arrow 44. Sensor 40 will be describedin more detail in connection with Figure 4 but for the present, light from a lamp 46 through a lens 48 may be directed to the paper 12 directly under sensor 40 for reflection therefrom or, if a transparency is used, light may be shined through the transparency or a white backing material may be used so that the light passes through the transparency to the backing paper for reflection therefrom. In any event, non-specular reflection of such light off or through the image recorded there on passes to three photo detectors such as that shown by reference numeral 52 along a path shown by curved arrow 54. A signal indicative of the intensity of light received by detector 52 (and the other two detectors) from the image on the paper 12, is passed by lines 56 and 58 to the negative and positive inputs respectively of an amplifier 60. Amplifier 60 has an input 62 used to adjust the gain of the amplifier 60 and an output 64 which represents the magnitude of the signal received by detector 52 (and the other two detectors). Output 64 is connected to an analog-to-digital converter 66 which produces a digitized representation of its input signal on an output shown as arrow 68 connected to an input of a micro computer 70. Micro computer 70 also receives a signal indicative of the position of the medium as sensed by switch 38 from a connection shown as arrow 71. For purposes to be explained hereafter, micro computer 70 also receives an input from a read only memory 72 by way of a connection shown as arrow 74 and a third input from a non-volatile random access memory 76 which also receives an output from micro computer 70 as shown by double headed arrow 78. Micro computer 70 also has a plurality of outputs, a first of which is shown by arrow 80 to gain adjustment shown as box 82, which in the preferred embodiment is a programmable gain adjustment, having an output connected to amplifier 60 by the connection 62. While shown as an external gain adjustment 82, the gain adjusting function could be performed within amplifier 60 with well known circuitry. A second output shown as arrow 84 operates to control lamp 46 and a third output shown as arrow 86 operates to control a motor 88 which in turn operates to drive the capstan 16 as shown by dashed connection 90 to advance the medium 12 when desired. Micro computer 70 also has three outputs connected to control the CRT 22. A first of these outputs shown by arrow 92 leads to a digital-to-analog converter 94 which changes the digital output of the micro computer 70 to an analog signal which is presented by a line 96 to an amplifier 98. The output of amplifier 98 is connected to the second grid 28 by a line 100 and operates to provide a signal for correting drift which may occur in the CRT 22 as is explained in the above mentioned co-pending application. A second CRT control output from micro computer 70 is shown as an arrow 102 leading to a control register 104 having an output shown as arrow 106 to a digital-to-analog converter 108. D/A 108 changes the digital signal from control register 104 to an analog signal and presents it via line 110 to an amplifier 112 having an output on a line 114 connected to the cathode 24 to control the bias thereon as is described in the above mentioned co-pending application.

A third CRT control output is shown as an arrow 116 providing an input to a palette random access memory 118 for purposes to be described below. PalRAM 118 provides an output shown as arrow 120 to a digital-to-analog converter 122 which changes its digital intput to an analog signal for presentation via a line 124 to an amplifier 126 the output of which is connected via line 128 to the first grid 26 and operates, in this embodiment, as the pixel input to control the image produced by the CRT 22. As explained in the above mentioned co-pending application, the pixel input may be applied to the cathode 24 instead of the first grid 26.

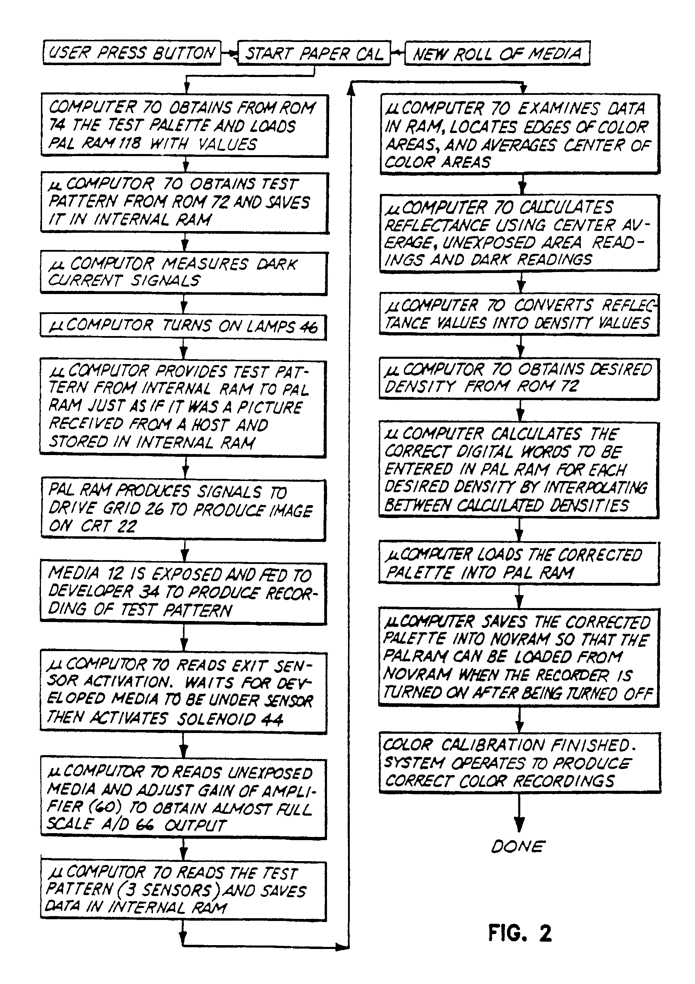

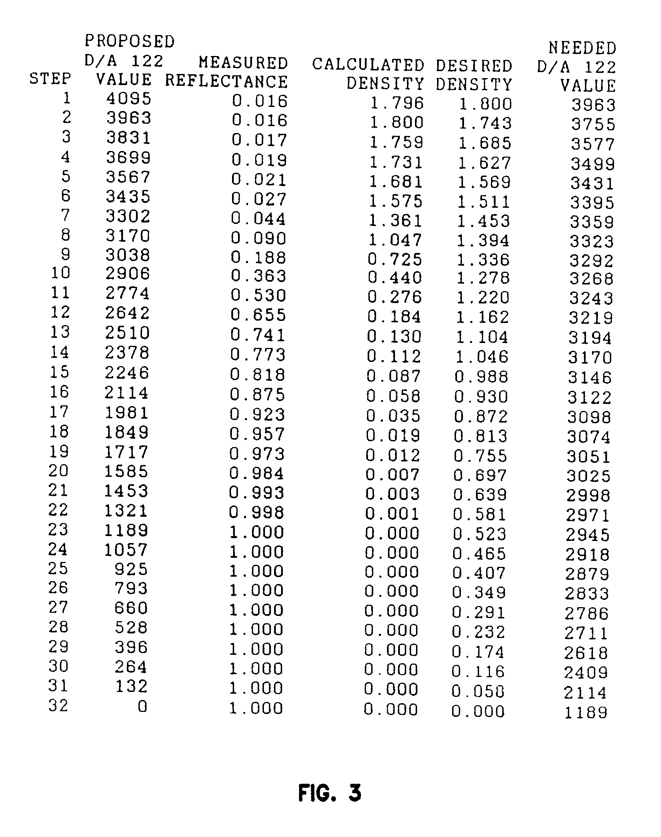

The operation of Figure 1 can best be understood by reference also to Figure 2. For normal image production, the CRT 22 is controlled in the manner shown by the above mentioned co-pending application. To this end, an additional input shown as arrow 140 is connected to micro computer 70 to receive the normal signals to produce images from a host or digital interface device. When it is desired to check and correct for any color deviations, as for example when a new supply of media is introduced, the calibration cycle is started either automatically or when called for by the operator. At this time, micro commputer 70 receives an input from ROM 72 which is a palette, i.e., a set of digital values representing each desired color. This palette is loaded into the PalRAM 118, which operates as a look up table with each desired color value at a predetermined location therein. Next, before lamp 46 is turned on, computer 70 measures the dark current signals from amplifier 60 and then turns lamp 46 on so that the apparatus can reach a state of equilibrium prior to taking actual color readings. ROM 72 presents, to microcomputer 70, a desired pattern, i.e, a sequence for use in producing the colors in a predetermined order to pattern. This information is stored in the micro computer's own internal RAM so that when the pattern is to be generated, the sequence signals, representing locations, are sent to the PalRAM 118 which, in turn, looks up the signals in accordance with the called for locations to produce a set of test pattern signals to be sent to the D/A converter 122 and amplifier 126. (An example of a set of proposed values to be sent to D/A 122 for one color can be seen in column 2 of Figure 3). The output of amplifier 126 varies the signal on the first grid 26 and thus generates the test pattern image on the face of the CRT which then exposes the medium 12 in accordance therewith. The exposed test pattern on the medium 12 is then cut, if desired, by cutter 30 and presented through accumulator 32 to the developer where the test pattern such as that seen in Figure 5 is produced.

When the developed image of the test pattern on medium 12 is ready, as determined by switch 38 the medium 12 is pressed against sensor 54 and a first measurement of the white or background, i.e, the portion of the media which does not have test pattern exposures thereon, is taken and stored via amplifier 60 and A/D 66 to the internal RAM of micro computer 70 which can then adjust the gain of amplifier 60 via gain adjust 82 so that the output of amplifier 60 varies almost 100 percent of the D/A's output capability.

After this, signals indicative of the radiance of each shade of each color are sensed by detector 52 (and the other two detectors) and presented via amplifier 60 and A/D 66 to the internal RAM of microcomputer 70. Since the individual color images may vary in reflectance near the edges of the patterns, the microcomputer determines where the edges of the color shades are and then selects several readings from the middle portion of the images and averages them to produce a sensed color value for each color in terms of reflectance. This color value is adjusted for dark current and for the background or white values, which, as described above have been stored in the internal RAM, and a set of measured reflectance values are produced. (An example of these values for the one color may be seen in column 3 of Figure 3). There after, each reflectance value is converted to a density value by microcomputer 70 to produce a set of values representing the calculated density of the colors from the test pattern. (An example of these values for the one color can be seen in column 4 of Figure 3).

Since, as described above, the desired densities can be obtained from ROM 72 (an example of these values can be seen in column 5 of Figure 3) micro computer 70 can calculate, in a manner to be described hereinafter, the corrected palette values needed to drive the input to D/A 122 to cause the proper signal on control grid 26. (An example of these values for the one color can be seen in Column 6 of Figure 3).

Referring now to Figure 3, 32 shades of one of the colors in the test pattern are represented by steps numbered 1 to 32 in column 1. For each step, the test pattern generated from ROM 72 through micro computer 70 and palette RAM 118 is shown in column 2 as a value ranging from the darkest color (4095) to the lightest color (0). These values are converted by the D/A 122 to analog signals which when amplified by amplifier 126 cause grid 26 to vary the beam from cathode 24 to the phosphors behind fibert optic head 20 and cause them to glow with a brightness dependent on the cathode current flow which is under the control of the voltage difference between the cathode 24 and the grid 26. This immage is transferred to the paper 12 which is then developed to produce a recording like that shown in Figure 5. It will be observed that in Figure 5, there are 32 shades for each of three colors, i.e., cyan, magenta and yellow and that the darkest color has been numbered "1" while the lightest color is numbered "32". It should also be noted that "1" is placed adjacent to "32" and "2" is placed adjacent "31" etc. at various locations within the pattern. For example, with the middle color, magenta, the shades start at the top with "7" followed by "26", then "8" followed by "25" etc. down toward the middle ending with "16" followed by "17". The densities then start with "1" followed by "32" etc. to the bottom of the drawing. The purpose of this is to produce shades which are in sharp contrast at their edges so that the exact line representing the edge of a particular density is clearly separated from its neighbor. If "1" were next to "2" the edge would be more difficult to locate. The colors cyan and yellow in the first and third columns of Figure 5 are arranged simmilarly but are off set with respect to each other. For example, while the magenta middle column started with "7", the cyan first column starts with "1" and the yellow third column starts with "12". The purpose of this is to enable the computer to determine edge locations even when two shades such as "16" and "17" are located together. In this case it is noted that the shades in the adjacent column are at high contrast i.e., "6" and "27" or "5" and "28". Other patterns could also be employed, for example, "1" next to "17", "2" next to "18" etc., thus providing good edge contrast in all cases.

The recording of the test pattern is now passed under the sensor 40 and is illuminated by lamp 46 so that detector 52 produces an output current dependent on the radiance of each of the 32 shades. This current is converted to a voltage and after amplification and digitization it is received by microcomputer 70 and converted into reflectance values as is shown in column 3 of Figure 3 ranging from 0.016 to 1.000. The density values of each reflectance value are obtained using a first look-up table as is shown in column 4 of Figure 3 ranging from 1.796 to 0.000.

Of course, each of the test pattern shades is supposed to have a desired known density which is shown in column 5 of Figure 3. As is seen in the example of Figure 3, most of the calculated densities of column 4 differ by varying amounts from the desired densities of column 5 and accordingly it will be necessary to apply a different voltage to the first grid 26 than was originally applied for each of the shades that differ in order to achieve the proper color density on the paper after development. This is achieved by interpolating the position of a desired density between the two nearest calculated densities and then using a second look-up table which determines the adjusted voltage of the grid 26 necessary to obtain that density. For example, at step 11, the desired density column shows a value of 1.220 which lies between steps 7 and 8, i.e., 1.361 and 1.047 in the calculated density column. The fraction between these values is:

(1.361 - 1.220)/(1.361 - 1.047) = 0.449 so the needed value to be applied to the A/D 122 becomes that fraction of the value between 3302 and 3170 in the proposed D/A 122 column as follows:

0.449 (3302 - 3170) = 59.27, and 3302 - 59.27 = 3243 (rounded off). This means that when the system calls for a color corresponding to step 11, the value 3243 should be presented to D/A 122 instead of the original 2774. As can be seen, this value is found opposite step 11 in column 6 of Figure 3. Similar calculations are made for each step with the result that the needed value for presentation to D/A 122 is generated for each step and thus column 6 is generated by micro computer 70. If a monochromatic or one color recording was all that was desired, the values in column 6 of Figure 3 would be sent to PalRAM 188 and would be sufficient for use in making such a recording. In the preferred embodiment, however, we employ three colors and accordingly, the same procedure as described above is used to generate a separate column 6 for each of the three colors and the newly generated values are then all sent to the pal RAM 118 to be used to generate the pictures which follow. These values are also sent to NOVRAM 76 for storage and future use with subsequent pictures taken with the same paper supply even though the system power had been turned off. When the paper supply changes again or the user desires, the above procedure is repeated to obtain a new set of "needed value"'s for the A/D 122.

It is thus seen that the present system operates to correct for changes in each and all shades of color which may occur in color recording such as when a new paper supply is introduced.

The sensor structure for sensor 40 will be better seen in Figure 4 where the housing 200 contains apertures 202, 204 and 206 with photo sensors 210, 212 and 214 mounted in the upper ends thereof, respectively. The recording medium or paper 218 is seen pressed against the lower end of housing 200. Light from lamps such as 46 in Figure 1 (not seen in Figure 4 direct light to the paper 218 at an angle and some of this light is reflected in a non specular fashion up toward each of the photo diodes through filters identified by reference numerals 219, 220 and 221 whose purpose is to filter out all colors except red (for the cyan emulsion on the film 12), green (for the magenta emulsion) and blue (for the yellow emulsion).

It is thus seen that we have provided a system which corrects all shades of color when variations occur due to changes in paper, phosphor sensitivity or developer parameters, to provide a high resolution recording in a simple, straightforward and inexpensive manner.

While the present invention has been described with reference to preferred embodiments, workers skilled in the art will recognize that changes may be made in form and detail without departing from the spirit and scope of the invention. For example, while we have converted radiance to density in the preferred embodiment, it could also be converted to into CIE tristimulus values X, Y and Z or any other color space parameters. Also, as mentioned above, while we have shown a color print on paper, a color transparency may be used and while a CRT has been employed, other color image producing devices such as LED arrays, laser images or a thermal head which transfers an image from a donor sheet to a receiver sheet may be used. Furthermore, in the preferred embodiment, while we have shown a test pattern of 32 steps and 32 step table in Figure 3, any number of steps may be employed. One present monocolor system utilizes 256 steps and three color systems using 256 steps are being developed and will provide even higher color resolution.

**Claims**

1. The method of correcting the color of a color recorder that includes a recording medium which is exposed to an image of a color pattern produced by an exposure source to produce a recording of the pattern, comprising the steps of:

A. supplying a set of first signals, each representing one of a plurality of desired shades of a desired color in a test pattern, to the exposure source to produce an image of the test pattern;

B. exposing the medium to the image to produce a recording of the test pattern;

C. measuring the radiance of each shade in the test pattern on the recording;

D. comparing a function of the measured radianceses with a function of the desired shades to determine any differences; and

E. modifying the input to the exposure source in accordance with each difference found in the comparison.

2. The method of claim 1 wherein step A includes producing the signals to the exposure source in accordance with a first set of values representative of desired radiances for each of the shades in the test pattern and wherein step C includes producing a second set of values representative of the measured radiances for each of the shades recorded on the medium.

3. The method of claim 2 wherein step D includes comparing the second set of values with the first set of values to determine the proper signals to the exposure source needed to produce the desired shades on the recording.

4. The method of claim 3 wherein step A includes storing the first set of values at a plurality of addressed in a look-up table and step E includes changing the values stored on the look-up table for each difference found in the comparison.

5. The method of claim 4 wherein the first set of values is stored in a computer, the second set of values is calculated by the computer and steps D and E are performed by the computer.

6. The method of claim 5, wherein when a predetermined shade is desired, a signal from the computer to the look-up table produces an output from the look-up table from an address that provides the proper signal to the exposure source.

7. The method of claim 1 wherein the functions of step D are the densities of the shades.

8. The method of claim 1 wherein the functions of step D are CIE tristimulus values X, Y and Z.

9. The method of claim 1 wherein the set of first signals of step A each represent one of a plurality of desired shades in each of three different colors.

10. Apparatus for correcting color in a color recording system having an electronic image producing device with a pixel input operable to provide a color image corresponding to the pixel input and a recording medium positioned to receive the color image to produce a color recording thereof, comprising:

storage means for producing a plurality of first signals each representing one of a plurality of desired shades of a color on a predetermined test pattern;

connecting means connecting the storage means to the pixel input of the image producing device to supply the plurality of signals thereto, the image producing device operating to provide an image of the test pattern;

means exposing the recording medium to the image of the test pattern, the recording medium producing a recording of the test pattern;

color radiance sensing means positioned to receive radiation from the recording of the test pattern and to produce a plurality of second signals each indicative of the radiance of one of the shades thereon;

comparing means connected to receive the output signals and to compare a function of the second signals with a function of the first signals to determine differences between the recorded shades and the desired shades; and

means connecting the comparing means to the storage means to modify the first signals in accordance with the differences in order to make, on subsequent recording, the shades on the recording substantially the same as the desired shades.

11. Apparatus according to claim 10 wherein the image producing device comprises a color CRT.

12. Apparatus according to claim 10 wherein the storage means is a look-up table and the comparing means is a portion of a microcomputer.

13. Apparatus according to claim 10 wherein the recording medium is a color sensitive paper.

14. Apparatus for correcting the color in a color recording system having a microcomputer for producing first signals indicative of a plurality of desired shades of color in a pattern to be recorded, an image producing device for receiving the signals from the microcomputer and providing an image of the pattern, and a recording medium for receiving the image of the pattern and producing a recording thereof comprising:

radiance sensing means connected to view the recorded image of the pattern and to produce second signals indicative of the shades of color in the measured pattern;

means connecting the radiance sensing means to the microcomputer to supply the second signals thereto, the microcomputer computing the difference between functions of the first and second signals as an indication of the difference between the radiance of the desired pattern and the measured pattern and correecting the first signals in accordance with the difference so that the recorded shades thereafter will correspond to the desired shades.

15. Apparatus according to claim 14 wherein the first signals comprise values in a plurality of addresses of a look-up table which values are corrected after the microcomputer computes the difference between the functions of the first and second signals.

16. Apparatus according to claim 15 wherein the pattern is a plurality of different shades of three different colors and the microcommputer determines the values of the first and second signals in terms of color density corresponding to the shades.

17. Apparatus according to claim 16 wherein the recording medium is a color sensitive paper which is developed to produce the recording.

18. Apparatus for correcting the color in a color recording system having a CRT with a pixel input and operable to provide an image of a pattern on the CRT face, a color sensitive paper movable proximate the face to receive exposure from the image and developing means to produce a visible recording of the image, comprising:

computer means having a first input to receive digital signals and an output, for color compensation, the computer means generating a first set of signals at the output representative of a test pattern of a plurality of shades of color;

look-up means connected to receive the first set of signals and having a plurality of addressed therein each storing one of the first set of signals, said look-up means operable to produce a second set of signals at an output thereof which signals are derived from the signals stored therein and are of magnitude which corresponds to the test pattern;

means connecting the look-up means to provide the second set of signals to the pixel input of the CRT so that the CRT produces an image of the test pattern, the color sensitive paper receiving the image of the test pattern and the developer producing a recording of the test pattern on the color sensitive paper;

color sensing means positioned to view the test pattern developed on the recording paper and to produce a third set of signals indicative of the radiances of the shades of colors in the recorded test pattern;

means connecting the color sensing means to the input of the computer means to transfer the third set of signals thereto, the computer means computing the difference between functions of the first and third set of signals to derive a fourth set of signals in accordance with the differences, the computer supplying the fourth set of values to the look-up means to replace the first set of signals stored therein so that subsequent recordings will be of the correct shades of color.

19. Apparatus according to claim 18 further including a read only memory in which test pattern values representing desired shadows of color for the test pattern are stored and including means connecting the read only memory to the computer means to transfer the test pattern values to the computer, and wherein the computer determines the first set of signals in accordance with the test pattern values and loads them into the look-up means when color compensation is desired.

20. A test pattern for use in a color correcting system comprising a plurality of different shades of a first color each with a different density and arranged in a first column so that shades of higher density are primarily positioned adjacent to shades of significantly lower density to provide well defined edges therebetween for use in determining the boundaries of the shades.

FIG. 1

FIG. 4

EP 0 454 085 A2

USER PRESS BUTTON → START PAPER CAL ← NEW ROLL OF MEDIA

COMPUTER 70 OBTAINS FROM ROM 74 THE TEST PALETTE AND LOADS PAL RAM 118 WITH VALUES

μ COMPUTOR 70 OBTAINS TEST PATTERN FROM ROM 72 AND SAVES IT IN INTERNAL RAM

μ COMPUTOR MEASURES DARK CURRENT SIGNALS

μ COMPUTOR TURNS ON LAMPS 46

μ COMPUTOR PROVIDES TEST PATTERN FROM INTERNAL RAM TO PAL RAM JUST AS IF IT WAS A PICTURE RECEIVED FROM A HOST AND STORED IN INTERNAL RAM

PAL RAM PRODUCES SIGNALS TO DRIVE GRID 26 TO PRODUCE IMAGE ON CRT 22

MEDIA 12 IS EXPOSED AND FED TO DEVELOPER 34 TO PRODUCE RECORDING OF TEST PATTERN

μ COMPUTOR 70 READS EXIT SENSOR ACTIVATION. WAITS FOR DEVELOPED MEDIA TO BE UNDER SENSOR THEN ACTIVATES SOLENOID 44

μ COMPUTOR 70 READS UNEXPOSED MEDIA AND ADJUST GAIN OF AMPLIFIER (60) TO OBTAIN ALMOST FULL SCALE A/D 66 OUTPUT

μ COMPUTOR 70 READS THE TEST PATTERN (3 SENSORS) AND SAVES DATA IN INTERNAL RAM

μ COMPUTER 70 EXAMINES DATA IN RAM, LOCATES EDGES OF COLOR AREAS, AND AVERAGES CENTER OF COLOR AREAS

μ COMPUTER 70 CALCULATES REFLECTANCE USING CENTER AVERAGE, UNEXPOSED AREA READINGS AND DARK READINGS

μ COMPUTER 70 CONVERTS REFLECTANCE VALUES INTO DENSITY VALUES

μ COMPUTER 70 OBTAINS DESIRED DENSITY FROM ROM 72

μ COMPUTER CALCULATES THE CORRECT DIGITAL WORDS TO BE ENTERED IN PAL RAM FOR EACH DESIRED DENSITY BY INTERPOLATING BETWEEN CALCULATED DENSITIES

μ COMPUTER LOADS THE CORRECTED PALETTE INTO PAL RAM

μ COMPUTER SAVES THE CORRECTED PALETTE INTO NOVRAM SO THAT THE PALRAM CAN BE LOADED FROM NOVRAM WHEN THE RECORDER IS TURNED ON AFTER BEING TURNED OFF

COLOR CALIBRATION FINISHED. SYSTEM OPERATES TO PRODUCE CORRECT COLOR RECORDINGS

DONE

**FIG. 2**

| STEP | PROPOSED D/A 122 VALUE | MEASURED REFLECTANCE | CALCULATED DENSITY | DESIRED DENSITY | NEEDED D/A 122 VALUE |
|---|---|---|---|---|---|
| 1 | 4095 | 0.016 | 1.796 | 1.800 | 3963 |
| 2 | 3963 | 0.016 | 1.800 | 1.743 | 3755 |
| 3 | 3831 | 0.017 | 1.759 | 1.685 | 3577 |
| 4 | 3699 | 0.019 | 1.731 | 1.627 | 3499 |
| 5 | 3567 | 0.021 | 1.681 | 1.569 | 3431 |
| 6 | 3435 | 0.027 | 1.575 | 1.511 | 3395 |
| 7 | 3302 | 0.044 | 1.361 | 1.453 | 3359 |
| 8 | 3170 | 0.090 | 1.047 | 1.394 | 3323 |
| 9 | 3038 | 0.188 | 0.725 | 1.336 | 3292 |
| 10 | 2906 | 0.363 | 0.440 | 1.278 | 3268 |
| 11 | 2774 | 0.530 | 0.276 | 1.220 | 3243 |
| 12 | 2642 | 0.655 | 0.184 | 1.162 | 3219 |
| 13 | 2510 | 0.741 | 0.130 | 1.104 | 3194 |
| 14 | 2378 | 0.773 | 0.112 | 1.046 | 3170 |
| 15 | 2246 | 0.818 | 0.087 | 0.988 | 3146 |
| 16 | 2114 | 0.875 | 0.058 | 0.930 | 3122 |
| 17 | 1981 | 0.923 | 0.035 | 0.872 | 3098 |
| 18 | 1849 | 0.957 | 0.019 | 0.813 | 3074 |
| 19 | 1717 | 0.973 | 0.012 | 0.755 | 3051 |
| 20 | 1585 | 0.984 | 0.007 | 0.697 | 3025 |
| 21 | 1453 | 0.993 | 0.003 | 0.639 | 2998 |
| 22 | 1321 | 0.998 | 0.001 | 0.581 | 2971 |
| 23 | 1189 | 1.000 | 0.000 | 0.523 | 2945 |
| 24 | 1057 | 1.000 | 0.000 | 0.465 | 2918 |
| 25 | 925 | 1.000 | 0.000 | 0.407 | 2879 |
| 26 | 793 | 1.000 | 0.000 | 0.349 | 2833 |
| 27 | 660 | 1.000 | 0.000 | 0.291 | 2786 |
| 28 | 528 | 1.000 | 0.000 | 0.232 | 2711 |
| 29 | 396 | 1.000 | 0.000 | 0.174 | 2618 |
| 30 | 264 | 1.000 | 0.000 | 0.116 | 2409 |
| 31 | 132 | 1.000 | 0.000 | 0.058 | 2114 |
| 32 | 0 | 1.000 | 0.000 | 0.000 | 1189 |

**FIG. 3**

FIG. 5

| | | |
|---|---|---|
| 1 | 7 | 12 |
| 32 | 26 | 21 |
| 2 | 8 | 13 |
| 31 | 25 | 20 |
| 3 | 9 | 14 |
| 30 | 24 | 19 |
| 4 | 10 | 15 |
| 29 | 23 | 18 |
| 5 | 11 | 16 |
| 28 | 22 | 17 |
| 6 | 12 | 1 |
| 27 | 21 | 32 |
| 7 | 13 | 2 |
| 26 | 20 | 31 |
| 8 | 14 | 3 |
| 25 | 19 | 30 |
| 9 | 15 | 4 |
| 24 | 18 | 29 |
| 10 | 16 | 5 |
| 23 | 17 | 28 |
| 11 | 1 | 6 |
| 22 | 32 | 27 |
| 12 | 2 | 7 |
| 21 | 31 | 26 |
| 13 | 3 | 8 |
| 20 | 30 | 25 |
| 14 | 4 | 9 |
| 19 | 29 | 24 |
| 15 | 5 | 10 |
| 18 | 28 | 23 |
| 16 | 6 | 11 |
| 17 | 27 | 22 |